# EUROPEAN PATENT APPLICATION

(11) **EP 4 461 396 A1**
(43) Date of publication of application: **13.11.2024**
(21) Application number: 24173926.7
(22) Date of filing: 02.05.2024
(51) Int. Cl.: B01D 37/04, B01D 29/66, B01D 29/01

(54) **MONITORING SYSTEM FOR A FILTRATION PROCESS**

(30) Priority: 08.05.2023 CH 4892023
(71) Applicant: Meili Technology SA, 1880 Bex (CH)
(72) Inventor: Taureg, Albert Deh Hwa, 1296 Coppet (CH); Kolinski, John, 1006 Lausanne (CH); Eddebbarh, Youssef, 1022 Chavannes-près-Renens (CH)
(74) Representative: P&TS SA (AG, Ltd.)

(57) **Abstract**

The present invention concerns a monitoring system (2) adapted to monitor and/or pilot a filtration process of a slurry (S) under pressure, based on data collected from sensor (Q1, Q2, Q3...Qn) and a first computing unit (U1). It further concerns a filtration reactor provided with such a monitoring system. It further concerns a filtration method operated and monitored by such a monitoring system, and a method of simulating filtration time based on some inputted parameters.

## Description

### Technical domain

The present invention relates to the field of filtration, in particular industrial filtration. A liquid is filtered out from solid particles, which form a so called cake. The present invention is directed to a device or system adapted to characterise the cake during the filtration process. The present invention further relates to a method to optimize the filtration parameters depending on the measured parameters, either in real time or from one to another batch. It further relates to a predictive method of filtration wherein at least some parameters can be predetermined for an optimized filtration, or for anticipating a maintenance operation.

### Related art

Filtration processes are widely used in the industry to extract liquids from solid materials. Large filtrations reactors are used to this end, wherein the mixture to be filtered is placed over a filter and pressed so that the liquid passes through the filter. A gas pressure is commonly used. An example of such filtration operation is commonly known as a Nutsche type filtration. The fluid slurry is placed in a filtration reactor so that the liquid is filtered out of the solid particles, which form a cake. However, under pressure, the cake in formation provides resistance to the liquid flow, which necessitates further step of deliquoring the cake. The deliquoring step is largely based on empirical experience and is not fully controlled. The time related to this step can vary in a large extend without being predictable. In consequence, the production time or quality of a batch can vary significantly, which can incur waste of money.

Some detection devices have been developed to determine the specific point where the liquid passes through the surface of the solid cake. This moment is considered as an important parameter in the filtration process. The documents US4929829 discloses a laser sensor adapted to such a detection. The document US20110184696 describes an optical sensor adapted to determined the thickness of the cake in a non destructive way, which is another parameter possibly relevant in a filtration process.

The document US2021086112 A1 describes a filtration process based on a rotatable shaft and calibrated protrusions adapted to define the particle size of a slurry. The described solution is thus not adapted to tradition Nutsche filtration, involving a deliquoring step of the cake.

The document US2016046503 A1 describes predictive maintenance operations based on the pressure or flow measurement during the filtration process. However, this solution does not allow to determine the relevant conditions for a filtration operation, and in particular, a deliquoring operation of the resulting cake.

The document WO2020084412 A1 describes an extraction process, aiming at recovering cannabinoid extracts from the biomass. Real-time data is collected so as to improve the extraction yield. This is however not applicable to a Nutsche type filtration process, under pressure variation, in particular regarding the treatment of the cake.

However, in practice, there is still room for improving the knowledge of the filtration, in particular the deliquoring step, and for providing a method which allows to perform the filtration under reproducible conditions and/or within a predictive timeframe.

### Short disclosure of the invention

An aim of the present invention is the provision of a device adapted to control the filtration parameters, in particular to provide a filtration program in a reproducible manner. It is an aim of determining at least some of the process parameters in real time so that the filtration process can be automatically controlled and/or adjusted. It is a further aim of the present invention to provide a device or a system adapted to built or optimise a filtration method for a given product to be filtered based on one or some sensed parameters.

Another aim of the invention is the provision of a filtration reactor adapted to define optimal filtration parameters and to operate an optimal filtration process, in particular wherein the filtration time is reduced to a minimal value.

Another aim of the present invention is to provide an optical sensor adapted to sense the surface of the material under filtration so as to automatically determine or adjust some filtration parameters when the nature of the surface varies.

It is another aim of the present invention to provide an optimised filtration method of a slurry under pressure or pressure cycles, wherein the filtration time is reduced to a minimum value.

It is a further aim of the present invention to provide a simulation method allowing to evaluate the filtration time of a slurry.

It is a further aim of the present invention to provide a method for anticipating or detect the necessity of a maintenance operation, based on the sensed parameters of a filtration, in particular, based on pressure, pressure profile or filtration time.

According to the invention, these aims are attained by the object of the attached independent claims, and better defined in the dependant claims.

With respect to what is known in the art, the invention provides the advantage that reproducible filtration parameters can be applied, that the filtration time can be anticipated or simulated, that some maintenance operations can be planned so as to keep the equipment under optimal conditions. Other advantages will be self evident in the following description.

### Short description of the drawings

Exemplar embodiments of the invention are disclosed in the description and illustrated by the following drawings :
Figures 1a, 1b, 1c, 1d : schematic representation of the different filtration step according to the present description.
Figure 2 : schematic representation of a monitoring system combined to a filtration reactor, according to an example of the present invention

### Examples of embodiments of the present invention

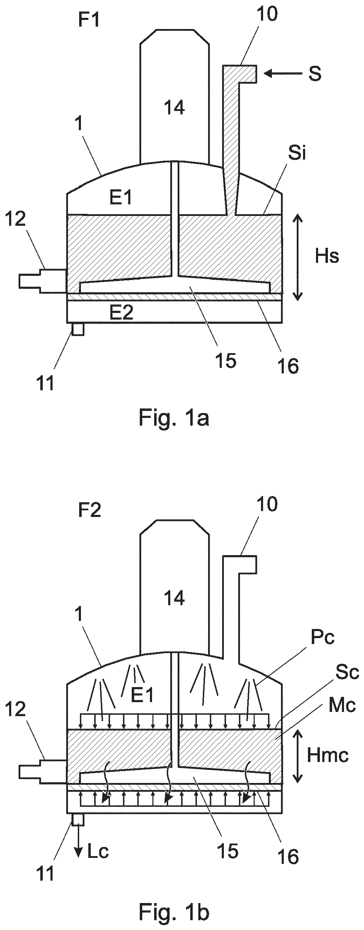

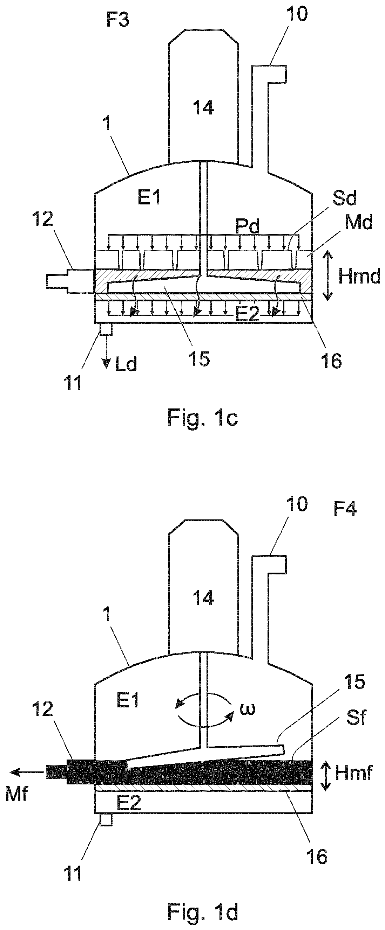

A schematic representation of the filtration process is provided in figures 1a, 1b, 1c and 1d. A feeding step F1 allows to fill a filtration reactor **1** with a slurry **S** through at least one feeding pipe **10.** The slurry denotes any solid material suspended in a liquid material which needs to be removed, so as to dry the solid material. The solid material denotes the manufactured component which needs to be retrieved and dried. The liquid can be any liquid used during the manufacturing, being either water or an aqueous mixture or an organic solvent or a mixture thereof. The slurry S fills an upward space **E2** of the filtration reactor **1,** which is separated from a downward space **E2** by a porous member **16.** Once the filtration reactor **1** is filled, the slurry **S** has an initial surface **Si** and an initial height Hs.

The filtration occurs in a step **F2,** also denoted as cake formation step, wherein a cake pressure **Pc** is applied to the slurry so as to filter the cake liquid **Lc** out of a liquid outlet **11,** arranged downstream the filtration reactor **1.** The cake pressure **Pc** is preferably obtained by mean of a gas injected in the upward space **E1** of the reactor under a controlled or controllable pressure. The cake formation step **F2** leads to a cake material **Mc** comprising the solid material to be retrieved and a part of liquid remaining within the solid material. A large part of the cake liquid Lc is filtered out through the porous member **16** while the solid material remains in the upward space **E1** and collected through at least one liquid outlet **11** arrange downstream the porous member **16.** The cake is considered to be formed when the liquid is passing through the cake surface **Sc.** At this stage, the height of the material has decreased to a value **Hmc** lower that the initial height **Hs** and corresponding to the height of the formed cake. The cake material **Mc** still comprises some liquid entrapped between the solid particles, which can hardly be removed under the conditions of the cake formation step **E2.**

Thus a deliquoring step **E3** needs to be initiated so that most of the entrapped liquid, or deliquoring liquid **Ld,** is drained out of the solid deliquoring material **Md** under suitable conditions. This deliquoring step **E3** can necessitate a specific deliquoring pressure **Pd** or pressure profile so as to efficiently filter out the deliquoring liquid **Ld.** The deliquoring material Md exhibit a deliquoring surface Sd. Its height is further reduced to a value Hmd lower than the Hmc value of the cake material **Mc.** The deliquoring liquid Ld is filtered out through the porous member **16** and collected by the at east one liquid outlet **11.**

A discharging step **E4** of the final material **Mf** remaining in the upward space **E1** then becomes possible. The final material **Mf** corresponds a concentrated solid material to be retrieved, wherein the amount of liquid has decreased below a predetermined threshold. For example, the final material **Mf** comprises less than **30%** or **25%** or **20%** or 10**%** or less of liquid. The final material **Mf** exhibits a final surface **Sf** and has a height **Hmf** which is further reduced compared to the height **Hmd** of the deliquoring material **Md.** A mechanical means, such as a mechanical stirrer **15** driven by a mechanical actuator **14** can be used to discharge the final materiel **Mf** through at least one solid outlet **12** arranged above the porous member **16.**

For a given solid material to be retrieved, several filtration cycles can be necessary, including for example washing cycles with different liquids. Even for one filtration cycle, the filtration time represents a large part of the overall process. It can drastically vary with uncontrolled parameters due to the inconsistent mechanical behaviour of the biphasic materials involved in the filtration process. The nature of the solid material, in particular its viscosity, its compressibility, the size or form of its particles, its chemical nature related for example to more or less polar groups or lipophilicity or hydrophilicity or amphiphilicity, its history and other parameters can significantly impact its behaviour under the filtration conditions. Similarly, the nature of the liquid also impacts the global behaviour of the slurry. Additional elements such as the temperature, the pH conditions, the number of filtration cycles the porous member as performed can drastically influence the outcome of the process. The filtration time can easily double in case of non optimal conditions.

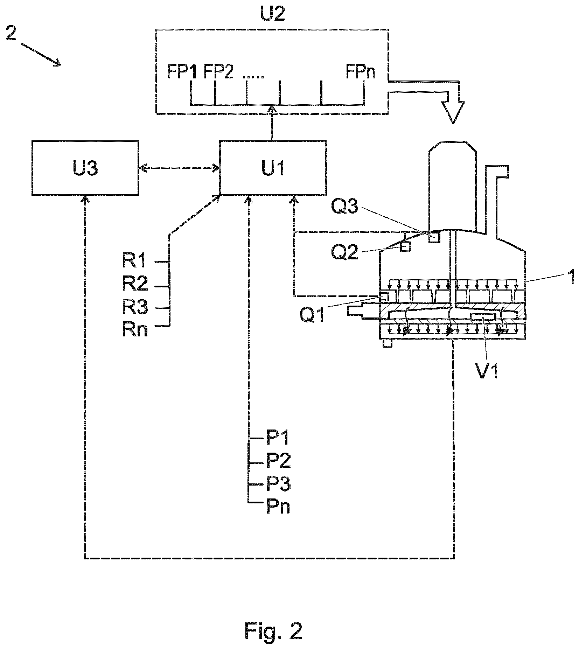

The filtration reactor **1** according to the present description comprises or is connected to a monitoring system **2** which is adapted to sense or determine at least some of the relevant cake characteristics or slurry characteristics, better shown in figure 2. The filtration reactor **1** is provided with one or several sensors **Q1, Q2, Q3...Qn** adapted to sense the process parameters such as the temperature, the applied pressure such as the pressure for cake formation **Pc,** the deliquoring pressure **Pd,** the level and/or the nature of the material surface, such as the initial surface **Si,** the cake surface **Sc,** the deliquoring surface **Sd** or the final surface **Sf,** and any other suitable parameter such as the **pH** conditions.

The sensors are selected among suitable sensors such as pressure sensors, thermometers of any suitable kind, pH meter, optical sensors including laser, UV and infra-red sensors, acoustic sensors, magnetic sensors such as hall effect based sensors.

The sensed parameters are collected by a first computing unit **U1** and computed in a way to determine the status of the material under filtration. For example, one or several pressure sensors determine whether the applied pressure, being either a cake pressure **Pc** or a deliquoring pressure **Pd,** corresponds to a predefined value, or goes below a low threshold or higher a high threshold or varies according to preestablished slopes or intermediate values. A pressure sensor can be arranged above the material under filtration process in the upward space **E1.** Alternatively or in addition, pressure sensors can be arranged on the side walls of the filtration reactor **1** internally to the reactor and below one of the initial surface **S1,** cake surface **Sc,** deliquoring surface **Sd** or final surface **Sf.** By this way, a pressure gradient can be detected and measured within the material under filtration. Alternatively or in addition, a pressure sensor can be arranged in the downward space **E2.** This is for example advantageous to determine a under pressure conditions, where applicable. One or several thermometers can be arranged inside the filtration reactor **1** above the material under filtration, or at a height below one of the initial **Hs,** cake Hmc, deliquoring **Hmd** or final **Hmf** values, or in the downward space **E2.**

Optical sensors can be arranged so that the nature or quality of one or several of the initial surface **S1,** cake surface **Sc,** deliquoring surface **Sd** and final surface **Sf** is determined. Alternatively or In addition, optical sensor, either the same or additional ones, can be arranged to determine the height of the material at any time so as to identify the initial height **Hs,** the cake height **Hmc,** the deliquoring height **Hmd** or the final height **Hf** or some or all of them.

The process parameters sensed as above-mentioned allow to determine whether the actual parameters correspond to the desired values at the considered time. The first computing unit **U1** compare in real time the sensed data with some reference data, which correspond for example to a preestablished program. In case one or several of these data no longer correspond to a predetermined value, the first computing unit **U1** can automatically input new filtration parameters **FP1, FP2, FPn** to a command unit **U2** so that the corresponding feature of the filtration reactor **1** is adjusted. For example, some pumps can be driven so as to properly adjust the pressure, some heater or cooling devices can be activated so as to control the temperature.

When some parameters have been sensed, the first computing unit U1 can automatically input filtration parameters corresponding to another step of the filtration process. For example, once the cake surface **Sc** is detected, it can be considered that the cake formation step **E2** is finish and that the deliquoring step **E3** should be initiated. The corresponding filtration parameters **FP1, FP2..FPn** are thus applied to the filtration reactor **1.**

The program followed by the first computing unit **U1** can comprises additional parameters not related to the process as such. For example, parameters related to the slurry itself or the solid material to be retrieved or the liquid can be implemented so the sensed parameters are properly computed according to the nature and the properties of the material under filtration. For example, product parameters **P1, P2, P3...Pn** such as viscosity, compressibility, particle size, density, polarity, lipophilicity, hydrophilicity, HLB, etc can be implemented. The product parameters can be theoretically known or physically determined by independent measurements. The product parameters can include additional items such as the rank of filtration cycle, which is particularly advantageous in case of several filtrations cycles with different washing processes. By this way, the history of the product under process can be taken into consideration.

The first computing unit **U1** can automatically adapt the filtration parameters **FP1, FP2, FP3..Fpn** in response to the sensed process parameters knowing the relevant product characteristics. For example, a pressure profile can be selected in a cake formation step **E2** or in a deliquoring step **E3** for a material having a given particle size, and another pressure profile can be selected for a material having a different particle size. Combination of product parameters can of course be considered when they are judged relevant. For example, particle size and viscosity or particle size and compressibility can together have a strong impact on the filtration outcome.

Alternatively or in addition, some parameters related to the equipment **R1, R2, R3...Rn** can be considered. For example, the nature or type of the porous member **16** can be object of a selection. A given porosity of the porous member **16** can have a strong impact on the filtration parameters such as the cake pressure **Pc** or the deliquoring pressure **Pd.** The first computing unit **U1** can thus be adapted to adapt the filtration parameters **FP1, FP2, FP3...FPn** either to the equipment or to the product or to both of them. The program can even comprise an alerting system when incompatible parameters are implemented. For example, in case the porosity of the porous member **16** is not compatible with the particle size of the material under filtration, an alert can be provided. Among the equipment parameters **R1, R2, R3...Rn,** the maintenance status of the porous member **16** or other items of the equipment can be considered. In case the porous member **16** has been involved in a predetermined number of filtration cycles, a corresponding parameter can be implemented in the first computing unit **U1.**

The elements of the filtration reactor **1** which need regular maintenance can also be identified by a readable means **V1** such as a RFID tag or an equivalent means. By this way, the monitoring system can easily be uploaded with the corresponding status of the equipment. According to an embodiment, after a given number of filtration cycles, the porosity of the porous member **16** can be adapted in the system so as to reflect its aging or its maintenance status. A porosity lower than its optimal porosity can be considered so as to adapt the filtration parameters **FP1, FP2, FP3...FPn** accordingly.

According to an embodiment, the filtration process or at least one of the cake formation step **E2** and the deliquoring step **E3** is partly or in entirety automatised, based on sensed process parameters and at least one product or equipment parameter. These product or equipment parameters can be manually implemented so as to built a preestablished filtration program to be followed. Under these conditions, limit values of at least some of the parameters, in particular process parameters sensed by the corresponding sensors **Q1, Q2, Q3...Qn** are manually implemented in the preestablished program so that the first computing unit **U1** can automatically pilot the filtration process according to the sensed data and theses limit values. For example, a relevant limit value can relate to the optical detection of the surface, and one of its change between the initial surface **Si,** the cake surface **Sc,** the deliquoring surface **Sd** or the final surface **Sf.** Under detection of such a surface, the first computing unit **U1** can automatically trigger or change the filtration parameters **FP1, FP2, FP3...FPn.** This allows to improve the reproducibility of a filtration process.

Alternatively, an operator can implement the first computing unit **U1** with some relevant product parameters **P1, P2, P3...Pn** and/or with some relevant equipment parameters **R1, R2, R3...Rn** without imputing any limit process values. The first computing unit **U1** can then be adapted to autonomously identify the sensed process parameters which incur filtration parameters change or adaptation, based on the imputed product and/or equipment parameters. Such an autonomous piloting can be based on similar filtration operation already performed and store under a memory.

According to an embodiment, the sensed parameters are collected to feed a second computing unit **U3.** The data related to the filtration are sored in at least one memory so that it can be computed and analysed. The cumulative results of the successive filtration processes can then be used to create or refine a filtration model **FM.** Such a filtration model **FM** comprises for example the most relevant parameters which influence the filtration process, including some process parameters, some product parameters, some equipment parameters or a combination of them. It further comprises some relevant interactions between parameters having synergistic effect on the filtration, either negative or positive. For example a combination of the applied pressure and the viscosity of the material under filtration, or its compressibility or its particle size can be considered. The most relevant parameters may be computed according to usual mathematical and/or statistical methods. Alternatively, the second computing unit **U3** can comprise or being connected to an artificial intelligence module adapted to compute the process parameters, the product parameters **P1, P2, P3...Pn,** the equipment parameters **R1, R2, R3...Rn** so as to identify the most optimal parameters or combination of parameters. The process parameters **FP1, FP2, FP3...FPn** of a given filtration procedure can be adapted in real time with some optimal parameters already identified by the second computing unit **U3** above-mentioned. Alternatively or in addition, a filtration model **FM** can be elaborated by the second computing unit **U3** based on the cumulative filtration operations so that a filtration program can be built and imputed in the first computation unit **U1** based on some parameters manually imputed.

The filtration model **FM** appears adapted to characterise accurately the material under filtration at any time, or at least during one or both of the cake formation step **E2** and the deliquoring step **E3.** This allows for example to limit the sensed parameters to the most relevant ones, and in consequence limit the number of the corresponding sensors **Q1, Q2, Q3...Qn** and/or to arrange them at the most relevant place. For example, the status of the cake material **Mc** can be accurately defined based on the combination of 2 or 3 sensed parameters such as the cake pressure **Pc,** the height of the cake **Hmc,** the cake surface **Sc,** and possibly knowing some product parameters.

The present description thus covers a monitoring system **2** as above described, comprising at least one process sensor **Q1, Q2, Q3...Qn,** such as a pressure sensor, a thermometer, an optical sensor and at least a first computing unit **U1** adapted to collect and compute the sensed data in a way to change or adjust the filtration parameters **FP1, FP2, FP3...FPn** in real time. The first computing unit **U1** can be integrated to the filtration reactor 1 or remotely arranged. It can for example take the form of a computer installed in the premise or in a remote office. Some adequate communication means can be considered so that the sensed data are properly transmitted to the first command unit **U1,** and that the filtration parameters **FP1, FP2, FP3, Fpn** can be transmitted to the filtration reactor **1.** Suitable command input such as keypad, display, tactile display, with the corresponding soft interface are used to this end. The monitoring system **2,** while allowing to monitor a filtration operation in real time, can in addition collect, store and compute the sensed data, and the imputed data through the second computing unit **U3.** The first computing unit **U1** comprises the appropriate means to interact with the command unit **U2** of the filtration reactor **1.** It can for example be plugged to it by means of an appropriate interface. Alternatively, it can be fully integrated into the command unit **U2.** The monitoring system **2** can in addition comprise or be connected to an artificial intelligence module as above described. The artificial intelligence module can be remotely arranged or physically combined or integrated to the monitoring system **2.**

The monitoring system **2** or part of it can be installed on a filtration reactor **1** so as to upgrade it with more functions. Alternatively, it can be integrated in all or in part to a new filtration reactor **1.** For example, a filtration reactor already provided with one or several sensors, such as those mentioned above, can be upgraded with at least a first command unit **U1** as above described. This does not exclude that additional specific sensor are added to the filtration reactor **1.** For example, a specific optical sensor can be implemented in replacement or in addition to a potential optical sensor already present in the filtration reactor **1.**

The present description also covers a filtration reactor **1** provided or connected to a monitoring system **2** as above-described.

According to one embodiment, the filtration reactor **1** provided with the monitoring system **2** is used for industrial production. A predefined filtration program can be set through the first computing unit **U1** so that it corresponds to the type and quantity of material to be filtered, the number of filtration cycles, the type of liquid used to rinse the solid material etc..

According to an embodiment, the filtration reactor **2** is a test device adapted to define or optimize a filtration method. It can be used to scale up a filtration operation from a laboratory scale up to an industrial scale. To this end, several filtration operations can be performed for a given slurry under different filtration conditions, wherein the process parameters **PF1, PF2, PF3...PFn** are set up and monitored. Based on the filtration tests a filtration model **FM** or a suitable filtration program can be setup so that it can be transferred to a filtration reactor **1** of industrial size and performance. A test device can have reduced dimensions compared to an industrial filtration reactor **1.** It can also be provided with more sensors, or sensors of more various types so that all the suitable parameters are actually monitored. The filtration model **FM** or the filtration program is thus optimized for the specific material to be filtered. It can take the form of a numerical file which can easily be transferred to another filtration reactor **1.**

The present description also covers a method of defining and/or optimizing a filtration process. The filtration process usually needs to be adapted to the type of the material to be filtered so as to be as efficient as possible. In particular, an optimized filtration method aims at reducing the global filtration time, or the filtration time of one or more of the cake formation step **E2** and the deliquoring step **E3.** Such a method comprises the step of inputting to the first computing unit **U1** at least some product parameters **P1, P2, P3...Pn,** and/or some equipment parameters **R1, R2, R3...R4.** The method further comprises the step of defining some filtration parameters **FP1, FP2, FP3...FPn.** They can be defined according to the previously defined product parameters or equipment parameters, or being independently defined. The method further comprises the step of performing the filtration process or at least one of its cake formation step **E2** and deliquoring step **E3,** according to the defined filtration parameters **FP1, FP2, FP3...FPn.** During the filtration, at least the pressure is controlled so that either a constant pressure or a progressively varying pressure can be applied. A progressively varying pressure denotes any pressure decreasing or increasing according to ramp of values, either linear or not. Alternatively, the pressure can be controlled so as to apply various discrete constant values for some time so as to provide scales of increasing or decreasing pressures. Pressures can be controlled by means of one or several pumps adapted to compress air or another gas in the upward space **E1** above the slurry. Alternatively or in addition, one or several vacuum pumps can be provided in the downward space **E2** so as to increase the pressure difference and/or gradient. Other parameters such as the temperatures can be controlled in a similar way. It is understood that the variation of the sensed parameters, in particular the pressure and/or the temperature can be monotonic or on the contrary time varying, according to the needs. Time varying parameters can be periodic or biased periodic or follow non periodic timeframe. During the filtration process, the surface of the material, such as the initial surface **Si,** the cake surface **Sc,** the deliquoring surface **Sd** and the final surface **Sf,** is monitored. The flowrate of the liquid filtering out of the cake, such as the cake liquid Lc or the deliqupring liquid Ld, can also be monitored.

The method can comprise a step of measuring the time of at least one of the cake formation step **E2** and deliquoiring step **E3.**

The method can further comprise the step of computing the filtration time of at least one of the cake formation step **E2** and deliquoiring step **E3** with regard to at least one or some of the inputted parameters, so as to determine at least one, preferably a combination of several relevant parameters. Such a computing step can be performed partly or in entirety by means of a dedicated first computing unit **U1.**

The method can comprise a step of providing a filtration model **FM** based on the above-mentioned computation, where applicable. A filtration model **FM** can comprise a pressure profile for one or several of the filtration steps, in particular for one of the cake formation step **E2** and the deliqupiring step **E3.** The pressure profile can be the same or different for each one the cake formation step **E2** and the deliqupiring step **E3** and independently comprise one constant value or several different values over time.

The present description also covers a simulation method of a filtration operation of a slurry. In particular, simulation of at least one of the cake formation step **E2** and the deliquring formation step **E3** can be performed based on previous filtration operations data which has been collected, stored and computed. More particularly, the filtration time of one or several of the filtration steps, in particular the cake formation step **E2** and/or the deliquoring step **E3,** can be simulated, or at least estimated. The simulation can be done with mathematical algorithms, or by means of an artificial intelligence module. The simulation method comprises a step of inputting at least one product data **P1, P2, P3...Pn,** such as its particle size, its viscosity or other rheological properties, its compressibility, its chemical nature and /or any other relevant parameters.

The simulating method can comprise a step of inputting at least one of the liquid property, such as its nature, its pH, whether it is a washing liquid or the reactional solvent, the rank of the filtration cycle etc..

The simulating method can comprise a step of inputting one or more equipment data **R1, R2, R3...Rn** such as aging, porosity or maintenance status of the filtration member **16** or other items.

The simulating method can comprise the step of selecting at least one process parameters such as a pressure, or a pressure limit such as a lower threshold or a upper threshold. The inputted data is computed according to pre-established rules, such as a filtration model, **FM,** so as to provide a simulation of the filtration process or at least some of its cake formation step **E2** and deliquoring step **E3.**

Alternatively, the simulation method allows to determine the most suitable pressure or pressure profiles for at least one the cake formation step **E2** and deliquoring step **E3** so at to minimize the corresponding time.

The present description further comprises a method of planning at least one of maintenance operation of a filtration reactor based on sensed parameters of a filtration process. In particular, the number of filtration cycles can be sorted in a memory, such as in the second computing unit **U3.** When a certain number of filtration cycles has been reached or is approaching, a maintenance alert can be emitted. The number of filtration cycles can be manually implemented at each filtration cycle. Alternatively, a filtration cycle can be automatically determined based on the periodical values of at least one process parameter. For example, the cyclic variation of the sensed pressure and/or sensed temperature can allow to identify a filtration cycle. Alternatively or in addition, the performances of the equipment can be deduced from the sensed parameters. For example, a sensed pressure and/or temperature becoming higher than expected or higher than a mean value, can indicate an aging of the filtration member 16 and that a maintenance or replacement operation should be planned. Alternatively or in addition, the filtration time can be compared to an expected filtration time under the filtration conditions. An increase of the filtration time can indicate a decrease of the equipment performance and thus a maintenance or replacement operation. The expected filtration time can be obtained out of a simulation above described.

The maintenance operation can be curative or can be anticipated, as predictive maintenance steps.

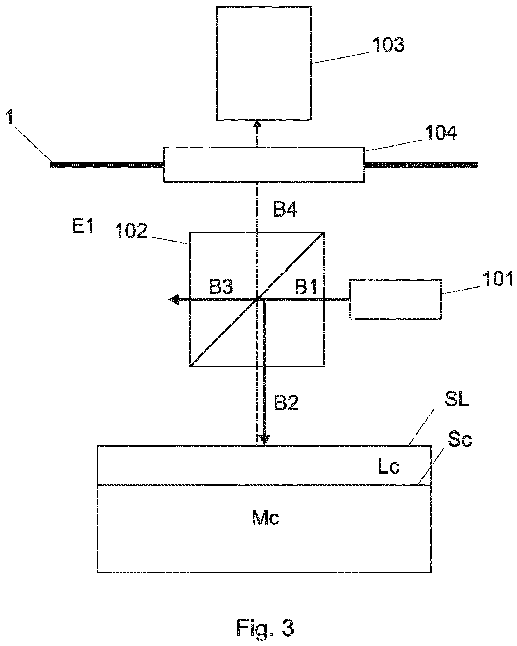

The present description also relates to one or several sensors adapted to sense the process parameters. It relates in particular to an optical sensor based on a laser beam, a beam splitter and a photodiode adapted to identify the nature of the surface of the filtrated material. Figure 3 provides an example of such an optical sensor adapted to identify the cake surface **Sc** when the corresponding liquid suspension **Lc** passes through the cake material **Mc.** The optical sensor comprises a laser system **101** adapted to provide a laser beam **B1** directed to a beam splitter **102.** The laser beam **B1** is split between a first beam **B2** directed to the material under filtration and a second beam **B3.** Depending on the nature of the surface of the material under filtration, a reflected beam **B4** is directed from the surface of the material under filtration toward a photodiode **103.** The resulting light intensity is measured by the photodiode **103.** In case the surface of the material corresponds to a liquid surface **SL,** the reflected light **B4** will exhibit a high intensity. As soon as the liquid surface **SL** passes through the surface of the solid material such as the cake material **Mc,** the light intensity of the reflected beam significantly decreases.

According to an embodiment, the photodiode **103** is placed outside the filtration reactor **1** and the laser and the laser splitter are placed inside the filtration reactor. A protective glass **104** is arranged between the photodiode and the beam splitter.

According to another embodiment, all the photodiode **103** , the laser and the laser splitter are placed outside the filtration reactor. The cake surface **Sc** can be sensed across a transparent protective device.

The photodiode **103** can be combined to any suitable elements such as optical lenses and suitable electronic means.

### Reference symbols in the figures

- 1: Filtration reactor
- 2: Monitoring system
- 10: Feeding line
- 11: Liquid outlet
- 12: Solid outlet
- 14: Mechanical actuator
- 15: Mechanical stirrer
- 16: Porous member
- S: Slurry
- S1: Initial surface
- Mc: Cake material
- Sc: Cake surface
- Hmc: Cake height
- Pc: Pressure for cake formation
- Lc: Liquid filtered during cake formation
- Sd: Cake surface during the deliquoring
- Md: Deliquored material
- Hmd: Height of the deliquored material
- Ld: Liquid filtered during the deliquoring step
- Pd: Deliquoring pressure
- Mf: Final solid material
- Sf: Final surface
- Hmf: Height of the final material
- E1: Upward space
- E2: Downward space
- F1: Feeding step
- F2: Cake formation
- F3: Deliquoring step
- F4: Discharge step
- U1: First computing unit
- U2: Command unit
- U3: Second computing unit
- FP1, FP2, FP3, FPn: Filtration parameters
- R1, R2, R3, Rn: Equippement parameters.
- P1, P2, P3, Pn: Product parameters
- V1: Readable means

## Claims

1. A monitoring system (2) adapted to monitor and/or pilot a filtration process of a slurry (S) wherein a cake is formed under pressure, comprising at least one sensor (Q1, Q2, Q3...Qn) and a first computing unit (U1), wherein the first computing unit (U1) is adapted to collect and compute the data transmitted by said at least one sensor so as to determine or adjust in real time at least one filtration parameter (PF1, PF2, PF3...PFn), **characterized in that** said at least one sensor is adapted to sense at least some of the characteristics of said slurry and/or said cake.

2. Monitoring system according to claim 1, wherein said at least one sensor is selected among one or several pressure sensors, one or several thermometers and one or several optical sensors.

3. Monitoring system according to one of claims 1 and 2, said first computing unit (U1) comprising or being connected to a second computing unit (U3) adapted to store and compute the process parameters of said filtration process so as to provide a filtration model (FM) or simulate a filtration operation.

4. Monitoring system according to one of claims 1 to 3, wherein said at least one filtration parameter (PF1, PF2, PF3...PFn) are determined or adjusted according to a pre-established program or a pre-established filtration model (FM).

5. Monitoring system according to one of claims 1 to 4, further comprising or being connected to artificial intelligence module.

6. A filtration reactor (1) provided with a monitoring system (2) as defined in one of claims 1 to 5, said filtration reactor (1) comprising a command unit (U2), the first computing unit (U1) of said monitoring system being connected to said command unit (U2) so as to transmit said at least one filtration parameter (PF1, PF2, PF3...PFn).

7. Filtration reactor according to claim 6, said filtration reactor being an industrial filtration reactor or a scale up test device.

8. A filtration method of a slurry (S), wherein the filtration comprises a cake formation step (E2) and a deliquoring step (E3), said filtration method being implemented and monitored by the monitoring system (2) according to one of claims 1 to 5, comprising the steps of :
- inputting to the first computing unit (U1) of said monitoring system at least one product parameters (P1, P2, P3... Pn), and/or at least one equipment parameters (R1, R2, R3...R4),
- defining at least one filtration parameter (FP1, FP2, FP3...FPn), and
- operating at least one of the cake formation step (E2) and a deliquoring step (E3) according to said at least one defined filtration parameter (FP1, FP2, FP3...FPn).

9. Method according to claim 8, wherein said at least one filtration parameter (FP1, FP2, FP3...FPn) is manually defined or automatically implemented based on a predetermined filtration model (MF), and monitored in real time by said first computing unit (U1).

10. Method according to one of claims 8 and 9, further comprising the steps of:
- collecting and storing the process data in a second computing unit (U3) and
- providing a filtration model (FM) based on said collected and stored data,

11. Method according to claim 10 wherein said filtration model (FM) is adapted to determine at least some of the filtration parameter (PF1, PF2, PF3...PFn) based on some product (P1, P2, P3...Pn) or equipment (R1, R2, R3...R4) inputted parameters, so that the filtration time is reduced.

12. Method according to claim 10 wherein said filtration model (FM) is adapted to simulate the time of at least one of the cake formation step (E2) and a deliquoring step (E3), based on some product (P1, P2, P3...Pn) or equipment (R1, R2, R3...R4) inputted parameters.

13. Method according to one of claims 8 to 12, wherein said at least one defined filtration parameter (FP1, FP2, FP3...FPn) in the at least one of the cake formation step (E2) and a deliquoring step (E3) is defined according to some algorithms of an artificial intelligence provided through an artificial intelligence module.

14. A method for maintenance planning based on sensed parameters of a filtration of a slurry (S) comprising the steps of:
- Performing a filtration according to preestablished filtration parameters (PF1, PF2, PF3...PFn),
- Sensing at least one process parameter by means of a suitable sensor (Q1, Q2, Q3...Qn), and/or comparing the filtration time with an expected filtration time, and
- Deducing from said process parameters and/or filtration time whether a maintenance or replacement operation should be performed.

15. An optical sensor adapted to sense the nature of a surface of material under filtration placed in a filtration reactor (1), comprising a laser generator (101), a laser splitter (102) and a photodiode (103), wherein the photodiode (103) is placed outside the filtration reactor and the laser is placed inside or outside the filtration reactor.
